# EUROPÄISCHE PATENTSCHRIFT

(11) **EP 3 286 824 B1**
(45) Veröffentlichungstag und Bekanntmachung des Hinweises auf die Patenterteilung: **09.01.2019**
(21) Anmeldenummer: 16711795.1
(22) Anmeldetag: 09.03.2016
(51) Int. Cl.: H02K 5/20, H02K 9/19

(54) **KÜHLKÖRPER FÜR EINE ELEKTRISCHE MASCHINE UND VERFAHREN ZUM FERTIGEN DESSELBEN**
HEAT SINK FOR AN ELECTRIC MACHINE AND METHOD FOR MANUFACTURING THE SAME
DISSIPATEUR THERMIQUE POUR UNE MACHINE ÉLECTRIQUE ET PROCÉDÉ DE FABRICATION

(30) Priorität: 24.04.2015 DE 102015207538; 20.05.2015 DE 102015209235
(43) Veröffentlichungstag der Anmeldung: 28.02.2018
(73) Patentinhaber: Robert Bosch GmbH, 70442 Stuttgart (DE)
(72) Erfinder: PLOEGER, Armin, 31139 Hildesheim (DE); REICHERT, Birgit, 38239 Salzgitter (DE); STEIN, Sebastian, 30459 Hannover (DE); KNAPPENBERGER, Uwe, 75417 Muehlacker (DE); LANGE, Fabian, 30175 Hannover (DE); CARRILLO, Camilo, 70193 Stuttgart (DE); ROEPKE, Matthias, 31137 Hildesheim (DE); KIRCHHOFF, Karsten, 31196 Sehlem (DE); BRUNS, Sebastian, 31171 Nordstemmen (DE)
(86) Internationale Anmeldenummer: PCT/EP2016/055062
(87) Internationale Veröffentlichungsnummer: WO 2016/169695

(56) Entgegenhaltungen:
- WO-A1-03/100946
- DE-A1- 19 827 333
- DE-A1-102008 027 293

## Beschreibung

### Gebiet der Erfindung

Die Erfindung betrifft einen Kühlkörper für eine elektrische Maschine sowie eine mit einem solchen Kühlkörper ausgestattete elektrische Maschine. Die Erfindung betrifft ferner ein Verfahren zum Fertigen des Kühlkörpers.

### Stand der Technik

Elektrischen Maschinen, wie sie beispielsweise als Elektromotoren oder Generatoren in Elektro- oder Hybridfahrzeugen eingesetzt werden, werden zunehmend höhere Leistungen bzw. Leistungsdichten abverlangt. Verluste bei einer Umwandlung zwischen elektrischer und mechanischer Energie und andere Effekte bewirken, dass in elektrischen Maschinen Wärme generiert wird. Um eine Überhitzung der elektrischen Maschine zu verhindern, wird häufig eine Fluidkühlung, insbesondere eine Flüssigkeitskühlung eingesetzt.

Bisher werden Fluidkühlungen dabei oft mithilfe speziell ausgestalteter, beispielsweise doppelwandiger Gehäuse ausgebildet, bei denen durch Kanäle oder Rippen ein Kühlfluid geleitet wird. Das Gehäuse grenzt dabei an Komponenten der elektrischen Maschine wie z.B. den Stator an, sodass Wärme aus diesen abgeleitet werden kann. Eine Herstellung und/oder zuverlässige Abdichtung der zur Kühlung eingesetzten Gehäuse kann aufwändig und kostenintensiv sein.

Eine Kühlvorrichtung für eine Elektromaschinenanordnung ist beispielsweise in DE 10 2009051881 beschrieben.

In DE 198 27 333 A1 wird ein Kühlkörper beschrieben, der aus einem einzelnen Kühlkanal gefertigt ist, der spiralförmig aufgewickelt ist und so in eine zylindrische Form gebracht wird.

WO 93/100946 A1 zeigt den Kühlkörper einer elektrischen Maschine, der direkt als zylinderförmiges Aluminium-Strangpressprofil gefertigt ist.

DE 10 2008 027 293 A1 zeigt einen Kühlkörper der aus einer ebenen Platte mit innenliegenden Kühlkanälen gebildet ist und mehrere Biegestellen umfasst. Dieser Kühlkörper, der zum Kühlen einer Fahrzeugbatterie geeignet ist, umfasst mehrere 180°-Biegestellen, wodurch ein wellenförmiger Aufbau entsteht.

### Offenbarung der Erfindung

### Vorteile der Erfindung

Ausführungsformen der vorliegenden Erfindung können in vorteilhafter Weise ermöglichen, einen Kühlkörper bereit zu stellen, mit dessen Hilfe Wärme effizient aus einer elektrischen Maschine abgeleitet werden kann. Der Kühlkörper kann so ausgebildet sein, dass ein Bauraum der elektrischen Maschine klein gehalten werden kann. Dabei kann der Kühlkörper einfach aufgebaut und daher unter anderem zuverlässig und verschleißarm sein. Außerdem kann der Kühlkörper einfach und kostengünstig gefertigt werden.

Gemäß einem ersten Aspekt der Erfindung wird ein Kühlkörper für eine elektrische Maschine vorgeschlagen, der wenigstens einen Kühlkanal, der an einen von dem Kühlkörper umgebenen Innenraum angrenzt, aufweist. Der Kühlkörper zeichnet sich dadurch aus, dass er als einstückige, zu einem geschlossenen Ring gebogene Platte ausgebildet ist, bei der im Bereich einer Naht zwei gegenüberliegende Stoßflächen fluiddicht miteinander verbunden sind. In der Platte verlaufen hierbei mehrere geschlossene Kanäle, welche derart schräg zur Umlaufrichtung des Rings verlaufen, dass benachbarte Kanäle im Bereich der Naht ineinander münden und so einen durchgehenden, spiralförmigen Kanal bilden, der sich in mehreren Spiralwindungen von einem axial vorderen Ende hin zu einem axial hinteren Ende des ringförmigen Kühlkörpers erstreckt.

Gemäß einem zweiten Aspekt der Erfindung wird ein Verfahren zum Fertigen eines Kühlkörpers für eine elektrische Maschine beschrieben, welches sich durch folgende Schritte auszeichnet: zunächst wird eine Platte, in der mehrere geschlossene Kanäle benachbart zueinander verlaufen, bereitgestellt. Anschließend wird die Platte derart gebogen, dass sie einen Ring bildet, bei dem im Bereich einer Naht zwei Stirnflächen der Platte als Stoßflächen einander gegenüber liegen. Dann werden die beiden gegenüberliegenden Stoßflächen der Platte in axialer Richtung relativ zueinander derart verlagert, dass benachbarte Kanäle im Bereich der Stoßflächen ineinander münden und so einen durchgehenden, spiralförmigen Kanal bilden, der sich in mehreren Spiralwindungen von einem axial vorderen Ende hin zu einem axial hinteren Ende des ringförmigen Kühlkörpers erstreckt. Abschließend werden die beiden gegenüberliegenden Stoßflächen der Platte fluiddicht miteinander verbunden.

Ideen zu Ausführungsformen der vorliegenden Erfindung können unter anderem als auf den nachfolgend beschriebenen Gedanken und Erkenntnissen beruhend angesehen werden.

Der beschriebene Kühlkörper kann sehr einfach aufgebaut sein und einfach zu fertigen sein. Im Wesentlichen kann der Kühlkörper lediglich aus einer mit geeigneten Kanälen versehenen und geeignet gebogenen Platte bestehen. Stirnflächen der Platte können einander nach dem Biegen der Platte als Stoßflächen gegenüberliegen, sodass sie in Form einer Art Naht miteinander verbunden werden können. Dabei kann die Platte vor dem Verbinden der Stoßflächen derart verzogen werden, dass die sich gegenüberliegenden Stirnflächen der Platte in axialer Richtung gegeneinander versetzt angeordnet sind. Dadurch kann erreicht werden, dass die Kanäle nicht genau in Umfangsrichtung der vorzugsweise zu einem Zylinder gebogenen Platte sondern leicht schräg zu dieser Umfangsrichtung verlaufen. Jeder Endbereich eines Kanals mündet deswegen nicht in einen Anfangsbereich desselben Kanals. Stattdessen mündet ein Endbereich eines Kanals in einen Anfangsbereich eines benachbarten Kanals, dessen Endbereich wiederum in einen Anfangsbereich eines hierzu benachbarten Kanals mündet, usw. Insgesamt gehen die in der Platte benachbart zueinander angeordneten Kanäle somit sukzessive ineinander über, sodass sich ein durchgehender Kanal bildet, der sich in mehreren Spiralwindungen von einem axial vorderen Ende hin zu einem axial hinteren Ende des ringförmigen Kühlkörpers erstreckt. Der Kühlkörper wird dabei großflächig von dem Kühlkanal durchzogen, sodass Wärme, die beispielsweise in einem Stator einer elektrische Maschine erzeugt wird, der in dem von dem Kühlkörper umschlossenen Innenraum aufgenommen ist und an eine Innenoberfläche des Kühlkörpers angrenzt, effizient abgeleitet werden kann. Der Kühlkörper kann somit sehr einfach ausgestaltet sein und gefertigt werden.

Die für den Kühlkörper verwendete Platte kann beispielsweise zunächst als ebene Platte bereitgestellt werden, bevor sie dann in eine z.B. zylindrische Ringform verformt wird.

Die Kanäle können in der Platte als röhrenartige, längliche Hohlräume ausgebildet sein. Kühlfluid, welches an einer Seite in den Kanal eintritt, wird somit bis zum Ende des Kanals an der entgegengesetzten Seite geleitet werden.

Die Platte mit den darin verlaufenden Kanälen kann beispielsweise als Strangpressprofil ausgebildet sein. Anders ausgedrückt kann die Platte einschließlich der darin verlaufenden Kanäle durch Strangpressen hergestellt werden. Unter Strangpressen kann ein Umformverfahren zum Herstellen von Stäben, Drähten, Rohren und unregelmäßig geformten prismatischen Profilen wie z.B. der für den Kühlkörper zu verwendenden Platte verstanden werden. Es wird unter anderem in den DIN 8582 und DIN 8583 näher beschrieben. Beim Strangpressen wird im Allgemeinen ein auf Umformtemperatur erwärmter Pressling (Block) mit einem Stempel durch eine Matrize gedrückt. Eine äußere Form eines Pressstrangs wird durch die Matrize bestimmt. Durch verschieden geformte Dorne können Hohlräume erzeugt werden. Strangpressprofile erreichen typischerweise bis zu 60 m Länge. Zum Strangpressen eignen sich prinzipiell alle Metalle. Vorteile des Strangpressens sind insbesondere ein hoher, in einem Verfahrensschritt erreichbarer Umformgrad und geringe Werkzeugkosten.

Die für den Kühlkörper verwendete Platte kann beispielsweise aus Aluminium bestehen. Aluminium weist eine hohe Wärmeleitfähigkeit auf und lässt sich beispielsweise durch Strangpressen gut umformen.

Jeder Kanal kann zwei Kanalenden aufweisen, von denen ein Kanalende jeweils in einer der Stoßflächen und ein anderes Kanalende jeweils in der anderen Stoßfläche mündet.

Zumindest eine in der ersten Stoßfläche vorgesehene Kanalöffnung eines Kanals kann mit einer in der zweiten Stoßfläche vorgesehenen Kanalöffnung eines anderen, benachbarten Kanals strömungsverbunden sein und teilweise oder vollständig überlappen.

Von jeder Stoßfläche kann eine Kanalöffnung eines axial äußeren Kanals einen Einlass oder einen Auslass des durchgehenden, spiralförmigen Kanals bilden.

Die zwei gegenüberliegenden Stoßflächen der Platte können entlang der Naht stoffschlüssig miteinander verbunden sein. Eine stoffschlüssige Verbindung kann insbesondere für eine fluiddichte Verbindung der gegenüberliegenden Stoßflächen der Platte sorgen, sodass beispielsweise Kühlfluid am Ende eines Kanals der Platte verlustfrei in den Anfang eines benachbarten Kanal geleitet werden kann. Eine stoffschlüssige Verbindung kann beispielsweise durch Verschweißen, Verlöten, Verkleben oder Ähnliches erfolgen. Insbesondere durch ein Verschweißen der gegenüberliegenden Stoßflächen kann eine dichte und langfristig stabile Verbindung zwischen den Stoßflächen im Bereich der Naht erzeugt werden. Es können verschiedene Schweißverfahren eingesetzt werden, wobei Laserschweißen angesichts flexibler Prozessierungsmöglichkeiten und kurzer Prozessdauern besonders vorteilhaft erscheint.

Die Kanäle in der Platte können parallel zueinander und/oder parallel zu einem Rand der Platte verlaufen. In einer solchen Ausgestaltung kann die Platte insbesondere durch Strangpressen einfach hergestellt werden. Benachbarte Kanäle können dabei einen festen seitlichen Abstand zueinander haben und sind durch einen Wandbereich, der zwischen den benachbarten Kanälen verläuft, voneinander getrennt.

Dabei kann es als vorteilhaft angesehen werden, wenn benachbarte Kanäle weniger als 1cm, vorzugsweise weniger als 0,5cm seitlich voneinander beabstandet sind. Jeder der Kanäle kann dabei eine entsprechende Breite haben, die kleiner ist als der seitliche Abstand zwischen Kanälen, z.B. eine Breite von weniger als 0,8cm bzw. weniger als 0,4cm. Dadurch, dass die Kanäle eine geringe Breite aufweisen und seitlich voneinander wenig beabstandet sind, kann es beim Fertigen des Kühlkörpers genügen, die beiden gegenüberliegenden Stirnflächen der Platte lediglich geringfügig, d.h. z.B. weniger als 1cm bzw. weniger als 0,5cm in axialer Richtung relativ zueinander zu verlagern, um zu bewirken, dass benachbarte Kanäle im Bereich der Stoßflächen ineinander münden und so einen durchgehenden, spiralförmigen Kanal bilden. Ein derart geringfügiges axiales Verlagern der Stirnflächen verhindert, dass es zu übermäßigen mechanischen Verspannungen innerhalb der Platte kommt, welche ansonsten eine Integrität der Platte oder der Nahtverbindung im Bereich der Stirnflächen gefährden könnten.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass beispielsweise Merkmale des Kühlkörpers in geeigneter Weise kombiniert, angepasst oder ausgetauscht werden können oder in entsprechende Verfahrensmerkmale umgewandelt werden können, um umgekehrt, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine perspektivische Ansicht eines Kühlkörpers gemäß einer Ausführungsform der Erfindung.
Fig. 2 zeigt eine teilweise weggeschnittene Teilansicht des Kühlkörpers aus Fig. 1.
Fig. 3 zeigt eine isometrische Schnittansicht durch einen Kühlkörper gemäß einer Ausführungsform der Erfindung.
Fig. 4 zeigt eine seitliche Draufsicht auf Stirnflächen einer Platte für einen Kühlkörper gemäß einer Ausführungsform der Erfindung.
Fig. 5 veranschaulicht einen axialen Versatz einer zu einem Ring gebogenen Platte für einen Kühlkörper gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

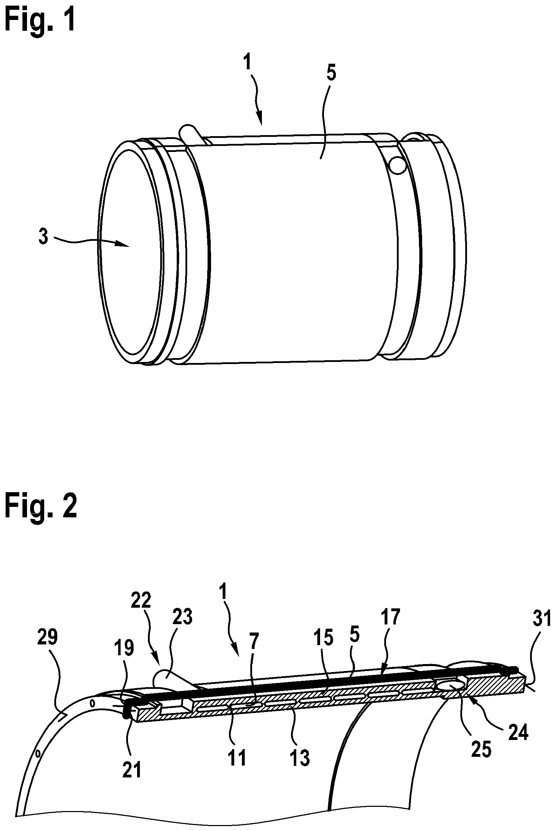

Figuren 1, 2 und 3 zeigen eine perspektivische Ansicht, eine teilweise weggeschnittene Ansicht und eine Schnittansicht eines Kühlkörpers 1 gemäß einer Ausführungsform der Erfindung. Der Kühlkörper 1 weist eine zylindrische Form auf. Ein Zylinderdurchmesser kann geeignet gewählt sein, um beispielsweise einen Stator einer elektrischen Maschine (nicht dargestellt) in einem Innenraum 3 des Kühlkörpers 1 aufnehmen zu können. Beispielsweise kann der Zylinderdurchmesser zwischen 2cm und 1 00cm, vorzugsweise zwischen 5cm und 40cm betragen. Eine axiale Länge des Kühlkörpers kann typischerweise zwischen 5cm und 200cm, vorzugsweise zwischen 10cm und 50cm betragen.

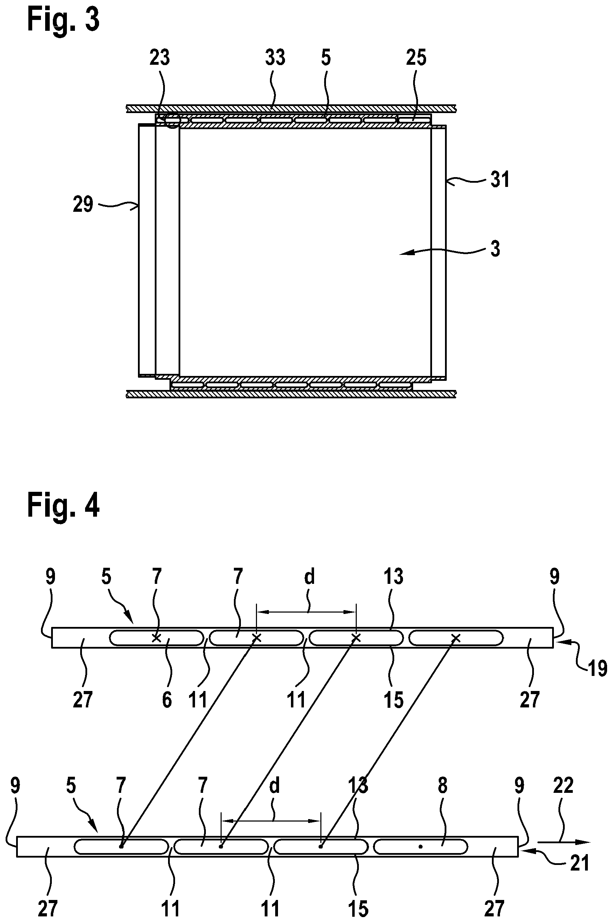

Der Kühlkörper 1 kann mithilfe eine Platte 5 gebildet werden, von der zwei an entgegengesetzten Stirnflächen befindliche Stoßflächen 19, 21 im Schnitt in Figur 4 dargestellt sind. Die Platte 5 kann anfänglich eben sein. Sie kann eine Dicke von beispielsweise zwischen 0,5cm und 20cm, vorzugsweise zwischen 1cm und 5cm aufweisen. Die Platte 5 kann aus einem thermisch gut leitfähigen Material, insbesondere einem Metall, vorzugsweise Aluminium, Kupfer, Eisen oder ähnlichem bzw. Legierungen davon bestehen.

In der Platte 5 sind mehrere Kanäle 7 ausgebildet. Die Kanäle 7 verlaufen innerhalb der Platte 5 gerade und parallel zueinander sowie parallel zu seitlichen Rändern 9. der Platte 5. Nebeneinander benachbarte Kanäle 7 sind durch Zwischenwandungen 11 voneinander separiert. Ein Mittenabstand d zwischen benachbarten Kanälen beträgt weniger als 1cm. Die Zwischenwandungen 11 können eine Breite von beispielsweise weniger als 1cm aufweisen. Wandungen 13, 15, die gleichzeitig nach außen freiliegende Oberflächen der Platte 5 bilden und die Kanäle 7 nach oben bzw. unten begrenzen, können eine Dicke von beispielsweise zwischen 0,3cm und 3cm aufweisen. Die Kanäle 7 können einen rechteckigen, ovalen, runden oder beliebig anderen Querschnitt aufweisen.

Angrenzend an die seitlichen Ränder 9 existiert jeweils ein Bereich 27 mit zusätzlichem Material, sodass im verbauten Zustand des Kühlkörpers 1 dort eine Befestigung zu weiteren Flanschen ermöglicht werden kann. Ferner können im Bereich 27 der Ränder 9 Front- bzw. Rückflächen 29, 31 des Kühlkörpers 1 bearbeitet werden, um sie beispielsweise parallel zueinander verlaufen zu lassen.

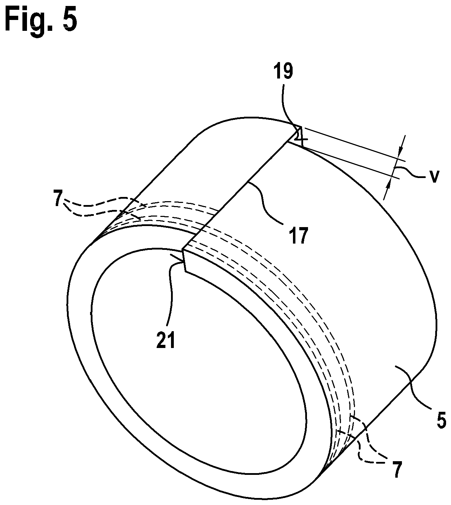

Um aus der mit Kanälen 7 versehenen ebenen Platte 5 den Kühlkörper 1 ausbilden zu können, wird die zunächst ebene Platte 5 im Rahmen eines Biegeprozesses in eine zylindrische Form gebracht. Die Platte 5 wird dabei zuvor auf eine Länge geschnitten, die dem Umfang der gewünschten Zylinderform entspricht. Dann wird die Platte um 360° gebogen, bis als Stoßflächen 19, 21 wirkende Stirnflächen der Platte 5 einander im Bereich einer Naht 17 gegenüber liegen. Nachfolgend wird die Platte 5 derart in einer Richtung 22 verzogen, dass die beiden gegenüberliegenden Stoßflächen 19, 21 relativ zueinander in axialer Richtung versetzt sind, wie dies in Fig. 4 und Fig. 5 veranschaulicht ist. Ein Versatz v ist dabei so gewählt, dass ein Ende eines Kanals 7 in einen Anfang eines benachbarten anderen Kanals 7 mündet. Anders ausgedrückt erfolgt ein axialer Versatz der Kanäle 7 am Ende und am Anfang der Platte 5 um einen Hohlraum nach rechts bzw. nach links. Abschließend werden die beiden Stoßflächen 19, 21 im Bereich der Naht 17 miteinander verbunden. Hierzu können die Stoßflächen 19, 21 an der Naht 17 beispielsweise miteinander verschweißt werden. Kanalöffnungen 6, 8 axial außenliegender Kanäle 7 können einen Einlass bzw. einen Auslass zu dem dazwischenliegenden durchgehenden spiralförmigen Kanal bilden.

Vor oder nach dem Verschweißen der Stoßflächen 19,21 werden die Stirnseiten des hohlzylinderförmigen Kühlkörpers 1 derart nachbearbeitet, dass sich plane Stirnflächen bzw. Stirnseiten ergeben. Die durch den axialen Versatz v gebildeten, einen stufenförmigen Absatz aufweisenden unebenen Stirnseiten des hohlzylinderförmigen Kühlkörpers 1 werden also nachträglich zu ebenen Stirnseiten umgearbeitet.

Jeder Kanal 7 weist also zwei Kanalenden auf, von denen das eine Kanalende jeweils in der Stoßfläche 19 und das andere Kanalende jeweils in der anderen Stoßfläche 21 mündet. Zumindest eine in der ersten Stoßfläche 19 vorgesehene Kanalöffnung eines Kanals 7 ist mit einer in der zweiten Stoßfläche 21 vorgesehenen Kanalöffnung eines anderen, benachbarten Kanals strömungsverbunden und überlappt mit dieser teilweise oder vollständig.
Dabei bildet von jeder Stoßfläche eine Kanalöffnung eines axial äußeren Kanals den Einlass oder den Auslass des durchgehenden, spiralförmigen Kanals.

Durch das Biegen um die zentrale Längsachse und das axiale Verlagern der Platte 5 gehen die Kanäle 7 derart ineinander über, dass sich ein durchgehender, spiralförmiger Kanal bildet, der sich in mehreren Spiralwindungen von einem axial vorderen Ende 22 hin zu einem axial hinteren Ende 24 des ringförmigen Kühlkörpers 1 erstreckt. An den Enden 22, 24 sind Ein- bzw. Auslässe 23, 25 vorgesehen, welche gegebenenfalls gezielt gedichtet werden müssen.

Der auf diese Weise gebildete Kühlkörper 1 kann an seiner radial inneren Oberfläche beispielsweise durch Drehen bearbeitet werden, insbesondere um ihn zu kalibrieren bzw. derart anzupassen, dass z.B. ein Stator der elektrischen Maschine passend mit mechanischem und thermischem Kontakt darin aufgenommen werden kann.

Der Kühlkörper 1 kann in einem Gehäuse 33 aufgenommen werden, dass die elektrische Maschine umgibt.

Der hierin beschriebene Kühlkörper 1 kann einfach und kostengünstig hergestellt werden und ermöglicht eine effiziente Kühlung einer elektrischen Maschine bei minimalem Bauraumbedarf.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Kühlkörper (1) für eine elektrische Maschine, aufweisend wenigstens einen Kühlkanal (7), der an einen von dem Kühlkörper (1) umgebenen Innenraum (3) angrenzt,
**dadurch gekennzeichnet, dass**
der Kühlkörper (1) als einstückige, zu einem geschlossenen Ring gebogene Platte (5) ausgebildet ist, bei der im Bereich einer Naht (17) zwei gegenüberliegende Stoßflächen (19, 21) fluiddicht miteinander verbunden sind,
wobei in der Platte (5) mehrere geschlossene Kanäle (7) von der einen Stoßfläche (19) zur anderen Stoßfläche (21) verlaufen, wobei die Stoßflächen (19, 21) derart zueinander in axialer Richtung versetzt sind, dass benachbarte Kanäle (7) im Bereich der Naht (17) ineinander münden und so einen durchgehenden, spiralförmigen Kanal bilden, der sich in mehreren Spiralwindungen von einem axial vorderen Ende (22) hin zu einem axial hinteren Ende (24) des ringförmigen Kühlkörpers (1) erstreckt.

2. Kühlkörper nach Anspruch 1, wobei die Platte (5) mit den darin verlaufenden Kanälen (7) als Strangpressprofil ausgebildet ist.

3. Kühlkörper nach Anspruch 1 oder 2, wobei die Platte (5) aus Aluminium besteht.

4. Kühlkörper nach einem der Ansprüche 1 bis 3, wobei jeder Kanal (7) zwei Kanalenden aufweist, von denen ein Kanalende jeweils in einer der Stoßflächen (19, 21) und ein anderes Kanalende (21) jeweils in der anderen Stoßfläche (21, 19) mündet.

5. Kühlkörper nach einem der Ansprüche 1 bis 4, wobei zumindest eine in der ersten Stoßfläche (19) vorgesehene Kanalöffnung eines Kanals (7) mit einer in der zweiten Stoßfläche (21) vorgesehenen Kanalöffnung eines anderen, benachbarten Kanals strömungsverbunden ist und teilweise oder vollständig überlappt.

6. Kühlkörper nach einem der Ansprüche 1 bis 5, wobei von jeder Stoßfläche (19, 21) eine Kanalöffnung eines axial äußeren Kanals (7) einen Einlass (6) oder einen Auslass (8) des durchgehenden, spiralförmigen Kanals bilden.

7. Kühlkörper nach einem der Ansprüche 1 bis 6, wobei die zwei gegenüberliegenden Stoßflächen (19, 21) der Platte (5) entlang der Naht (17) stoffschlüssig miteinander verbunden sind.

8. Kühlkörper nach einem der Ansprüche 1 bis 7, wobei die Kanäle (7) parallel zueinander und/oder parallel zu einem Rand (9) der Platte (5) verlaufen.

9. Kühlkörper nach einem der Ansprüche 1 bis 8, wobei benachbarte Kanäle (7) weniger als 1cm seitlich voneinander beabstandet sind.

10. Kühlkörper nach einem der Ansprüche 1 bis 9, wobei die zwei gegenüberliegenden Stoßflächen (19, 21) der Platte (5) derart nachbearbeitet sind, dass sich plane Stirnseiten des Kühlkörpers (1) ergeben.

11. Elektrische Maschine, aufweisend:
einen Stator,
einen Rotor, und
einen den Stator umgebenden Kühlkörper (1) gemäß einem der Ansprüche 1 bis 9.

12. Verfahren zum Fertigen eines Kühlkörpers (1) für eine elektrische Maschine, **dadurch gekennzeichnet, dass** das Verfahren folgende Schritte aufweist:
Bereitstellen einer Platte (5), in der mehrere geschlossene Kanäle (7) benachbart zueinander verlaufen;
Biegen der Platte (5) derart, dass sie einen Ring bildet, bei dem im Bereich einer Naht (17) zwei Stirnflächen der Platte (5) als Stoßflächen (19, 21) einander gegenüber liegen,
Verlagern der beiden gegenüberliegenden Stoßflächen (19, 21) der Platte (5) in axialer Richtung relativ zueinander derart, dass benachbarte Kanäle (7) im Bereich der Stoßflächen (19, 21) ineinander münden und so einen durchgehenden, spiralförmigen Kanal bilden, der sich in mehreren Spiralwindungen von einem axial vorderen Ende (22) hin zu einem axial hinteren Ende (24) des ringförmigen Kühlkörpers (1) erstreckt; und
fluiddichtes Verbinden der beiden gegenüberliegenden Stoßflächen (19, 21) der Platte.

13. Verfahren nach Anspruch 12, wobei die Platte (5) durch Strangpressen hergestellt ist.

14. Verfahren nach Anspruch 12 oder 13, wobei die beiden gegenüberliegenden Stoßflächen (19, 21) der Platte (5) durch Schweißen miteinander verbunden werden.

## Claims

1. Heat sink (1) for an electric machine, comprising at least one cooling channel (7) which adjoins an inner chamber (3) surrounded by the heat sink (1),
**characterized in that**
the heat sink (1) is designed as a single-piece plate (5) bent into a closed ring, in which two abutting surfaces (19, 21), which are positioned opposite each other, are connected to each other in a fluid-tight manner in the region of a joint (17),
wherein a plurality of closed channels (7) extend in the plate (5) from one abutting surface (19) to the other abutting surface (21), wherein the abutting surfaces (19, 21) are offset with respect to one another in the axial direction in such a way that adjacent channels (7) lead into each other in the region of the joint (17) and thus form one continuous, spiral channel which extends in multiple spiral turns from an axially front end (22) to an axially rear end (24) of the annular heat sink (1).

2. Heat sink according to Claim 1, wherein the plate (5) with the channels (7) extending therein is formed as an extruded part.

3. Heat sink according to Claim 1 or 2, wherein the plate (5) consists of aluminum.

4. Heat sink according to one of Claims 1 to 3, wherein each channel (7) has two channel ends, one of which leads into one of the abutting surfaces (19, 21) and another channel end (21) leads into the other abutting surface (21, 19) .

5. Heat sink according to one of Claims 1 to 4, wherein at least one channel opening of a channel (7) provided in the first abutting surface (19) is fluidically connected to a channel opening of another, adjacent channel provided in the second abutting surface (21), and partially or completely overlaps.

6. Heat sink according to one of Claims 1 to 5, wherein, with respect to each abutting surface (19, 21), a channel opening of an axially outer channel (7) forms an inlet (6) or an outlet (8) of the continuous, spiral channel.

7. Heat sink according to one of Claims 1 to 6, wherein the two abutting surfaces (19, 21) of the plate (5), which are positioned opposite each other, are bonded to one another along the joint (17).

8. Heat sink according to one of Claims 1 to 7, wherein the channels (7) extend in parallel to one another and/or in parallel to an edge (9) of the plate (5).

9. Heat sink according to one of Claims 1 to 8, wherein adjacent channels (7) are laterally separated from each other by less than 1 cm.

10. Heat sink according to one of Claims 1 to 9, wherein the two abutting surfaces (19, 21) of the plate (5), which are positioned opposite each other, result in planar front faces of the heat sink (1).

11. Electric machine, comprising:
a stator,
a rotor, and
a heat sink (1) surrounding the stator, according to one of Claims 1 to 9.

12. Method for producing a heat sink (1) for an electric machine, **characterized in that** the method includes the following steps: providing a plate (5) in which multiple closed channels (7) extend adjacently to one another; bending the plate (5) in such a way that said plate forms a ring in which two end faces of the plate (5) are positioned opposite each other, as abutting surfaces (19, 21), in the region of a joint (17),
displacing the two abutting surfaces (19, 21) of the plate (5), which are positioned opposite one another, relative to each other in the axial direction, in such a way that adjacent channels (7) lead into each other in the region of the abutting surfaces (19, 21) and thus form one continuous, spiral channel which extends in multiple spiral turns from one axially front end (22) to an axially rear end (24) of the annular heat sink (1); and connecting the two abutting surfaces (19, 21) of the plate, which are positioned opposite each other, in a fluid-tight manner.

13. Method according to Claim 12, wherein the plate (5) is produced by extrusion molding.

14. Method according to Claim 12 or 13, wherein the two abutting surfaces (19, 21) of the plate (5), which are positioned opposite each other, are connected to each other by welding.

## Revendications

1. Dissipateur thermique (1) pour une machine électrique, comportant au moins un canal de refroidissement (7) adjacent à un espace intérieur (3) entouré par le dissipateur thermique (1),
**caractérisé en ce que** le dissipateur thermique (1) est réalisé sous la forme d'une plaque (5) d'une seule pièce qui est fléchie de manière à obtenir une bague fermée et dans laquelle deux surfaces de butée (19, 21) opposées sont reliées l'une à l'autre de manière étanche aux fluides dans la zone d'une soudure (17),
dans lequel plusieurs canaux fermés (7) s'étendent dans la plaque (5) d'une surface de butée (19) à l'autre surface de butée (21), dans lequel les surfaces de butée (19, 21) sont décalées l'une par rapport à l'autre dans la direction axiale de telle manière que des canaux adjacents (7) débouchent les uns dans les autres dans la zone de soudure (17) et forment ainsi un canal continu en spirale s'étendant en plusieurs spires d'une extrémité axialement avant (22) à une extrémité axialement arrière (24) du dissipateur thermique annulaire (1).

2. Dissipateur thermique selon la revendication 1, dans lequel la plaque (5) dans laquelle s'étendent les canaux (7) est réalisée sous la forme d'un profilé extrudé.

3. Dissipateur thermique selon la revendication 1 ou 2, dans lequel la plaque (5) est constituée d'aluminium.

4. Dissipateur thermique selon l'une des revendications 1 à 3, dans lequel chaque canal (7) présente deux extrémités de canal, dont une extrémité de canal débouche respectivement dans l'une des surfaces de butée (19, 21) et dont l'autre extrémité de canal (21) débouche respectivement dans l'autre surface de butée (21, 19).

5. Dissipateur thermique selon l'une des revendications 1 à 4, dans lequel au moins une ouverture de canal d'un canal (7), prévue dans la première surface de butée (19), est reliée par écoulement à une ouverture de canal d'un autre canal adjacent prévu dans la seconde surface de butée (21), et se chevauche partiellement ou complètement.

6. Dissipateur thermique selon l'une des revendications 1 à 5, dans lequel, à partir de chaque surface de butée (19, 21), une ouverture de canal d'un canal axialement extérieur (7) forme une entrée (6) ou une sortie (8) du canal en spirale continu.

7. Dissipateur thermique selon l'une des revendications 1 à 6, dans lequel les deux faces de butée (19, 21) opposées de la plaque (5) sont reliées l'une à l'autre par complémentarité de matériaux le long de la soudure (17).

8. Dissipateur thermique selon l'une des revendications 1 à 7, dans lequel les canaux (7) s'étendent parallèlement les uns aux autres et/ou parallèlement à un bord (9) de la plaque (5).

9. Dissipateur thermique selon l'une des revendications 1 à 8, dans lequel les canaux adjacents (7) sont espacés latéralement de moins de 1 cm.

10. Dissipateur thermique selon l'une des revendications 1 à 9, dans lequel les deux surfaces de butée (19, 21) opposées de la plaque (5) sont retravaillées de manière à obtenir des surfaces avant planes du dissipateur de chaleur (1).

11. Machine électrique, comprenant :
un stator,
un rotor et
un dissipateur thermique (1) selon l'une des revendications 1 à 9 entourant le stator.

12. Procédé de fabrication d'un dissipateur thermique (1) destiné à une machine électrique, **caractérisé en ce que** le procédé comprend les étapes suivantes :
prévoir une plaque (5) dans laquelle une pluralité de canaux fermés (7) s'étendent de manière adjacente les uns aux autres ;
fléchir la plaque (5) de manière à obtenir une bague, dans laquelle, dans la zone d'une soudure (17), deux faces avant de la plaque (5) sont disposées l'une en face de l'autre en tant que surfaces de butée (19, 21),
déplacer les deux surfaces de butée (19, 21) opposées de la plaque (5) l'une par rapport à l'autre dans la direction axiale de telle manière que des canaux adjacents (7) débouchent les uns dans les autres dans la zone des surfaces de butée (19, 21) et forment ainsi un canal continu en spirale s'étendant en plusieurs spires d'une extrémité axialement avant (22) à une extrémité axialement arrière (24) du dissipateur thermique annulaire (1) ; et
relier de manière étanche aux fluides les deux surfaces de butée (19, 21) opposées de la plaque.

13. Procédé selon la revendication 12, dans lequel la plaque (5) est réalisée par extrusion.

14. Procédé selon la revendication 12 ou 13, dans lequel les deux surfaces de butée (19, 21) opposées de la plaque (5) sont reliées par soudage.
